# EUROPEAN PATENT SPECIFICATION

(11) **EP 3 381 740 B1**
(45) Date of publication and mention of the grant of the patent: **25.12.2019**
(21) Application number: 17189877.8
(22) Date of filing: 07.09.2017
(51) Int. Cl.: B60N 2/00

(54) **SEATING SENSOR**
SITZSENSOR
CAPTEUR DE SIÈGE

(30) Priority: 28.03.2017 JP 2017063609
(43) Date of publication of application: 03.10.2018
(73) Proprietor: AISIN SEIKI KABUSHIKI KAISHA, Kariya-shi, Aichi 448-8650 (JP)
(72) Inventor: KITO, Kosuke, Kariya-shi, Aichi 448-8650 (JP); NAKAYAMA, Koichi, Kariya-shi, Aichi 448-8650 (JP); AOYAMA, Mutsuro, Kariya-shi, Aichi 448-8650 (JP)
(74) Representative: TBK

(56) References cited:
- EP-A1- 3 078 540
- CN-U- 203 623 597
- JP-U- S49 113 909

## Description

### TECHNICAL FIELD

This invention relates to a seating sensor according to the preamble of claim 1.

### BACKGROUND DISCUSSION

As a seating sensor, the seating sensor disclosed in, for example, CN 203331880 U (see Figs. 1 to 3 thereof) has been known in the related art. This seating sensor includes a holder that is placed on a support member (a plurality of S-shaped springs) disposed under a cushion member of a seat cushion of a vehicle to support the cushion member, and a sheet-shaped sensor body that is placed on the holder and detects information of a load applied from the cushion member. For example, the holder is provided with a fitting portion having a pair of fitting pieces extending downward. The fitting portion is mounted on the support member in a state where the support member is fitted between the two fitting pieces. Further, substantially triangular hook-shaped slip-off preventing portions protrude in the mutually facing directions from the tip ends of the two fitting pieces.

In CN 203331880 U, when the fitting portion is mounted on the support member, the two fitting pieces need be elastically deformed such that the space between the fitting pieces is widened, and thus, the two slip-off preventing portions ride over the support member. Accordingly, it is preferable that each of the fitting pieces is thinned in order to be easily elastically deformed. However, for example, when the holder is deformed due to the load applied from the cushion member, stresses may be concentrated on the roots of the fitting pieces, which may cause the thinned fitting pieces to be broken.

Meanwhile, when each fitting piece is made thick in order to enhance the rigidity, the fitting pieces become difficult to be elastically deformed, which may deteriorate the assemblability.

Thus, a need exists for a seating sensor in which the fitting pieces may be suppressed from being broken without deteriorating the assemblability.

EP 3 078 540 A1 discloses a generic seating sensor according to the preamble of claim 1, which comprises a holder configured to be placed, in a state of being sandwiched between a cushion member of a seat cushion of a vehicle and a support member that supports the cushion member, on the support member; a sensor body placed on the holder and configured to detect information of a load applied from the cushion member; a fitting portion including a first fitting piece protruding downward from an end portion of the holder and a second fitting piece protruding downward from the holder in the vicinity to the first fitting piece behind the first fitting piece, and mounted on the support member in a state where the support member is fitted between the first and second fitting pieces; a slip-off preventing portion protruding from a tip end of the first fitting piece toward the second fitting piece; an arm portion protruding downward from the holder; and a second slip-off preventing portion protruding from a tip end of the arm portion and configured to be brought into contact with or located close to the support member from an upper side.

Further seating sensor configurations according to the prior art are shown in JP S49 113909 U and CN 203 623 597 U.

### SUMMARY

It is therefore the object of the invention to further develop a seating sensor according to the preamble of claim 1 such that its assemblability and mountability are improved.

The object of the invention is achieved by a seating sensor having the features of claim 1.

According to the claimed configuration of the present invention, when the first fitting piece is mainly elastically deformed at the time of mounting the fitting portion on the support member, the space between the first and second fitting pieces is widened, so that the slip-off preventing portion rides over the support member. Here, since the fitting portion (the first and second fitting pieces) is positioned at the end portion of the holder, for example, when the holder is deformed due to the load applied from the cushion member, the stresses concentrate on the root of the second fitting piece adjacent to the opposite side to the end portion of the first fitting piece. Even if the second fitting piece is made difficult to be elastically deformed, since the influence on the assemblability is small, for example, the rigidity of the second fitting piece may be enhanced by making the second fitting piece thick. Thus, the second fitting piece may be suppressed from being broken. Meanwhile, since the stresses concentrating on the root of the first fitting piece becomes relatively small, the first fitting piece may be suppressed from being broken, even if the first fitting piece is thinned to be easily elastically deformed. Further, by making the first fitting piece is easily elastically deformed, the assemlability may be suppressed from being deteriorated.

The seating sensor further includes: an arm portion protruding downward from the holder; and a second slip-off preventing portion protruding from a tip end of the arm portion and configured to be brought into contact with or located close to the support member from an upper side.

Accordingly, the upward positional deviation of the holder with respect to the support member is limited to the range until the second slip-off preventing portion comes into contact with the support member. Thus, the holder may be suppressed from being separated upward from the support member.

The seating sensor further includes: a pair of the arm portions that are arranged side by side in a first direction orthogonal to a direction in which the first and second fitting pieces are arranged side by side and configured to be brought into contact with or located close to the support member at one side and the other side in the first direction, and a backlash suppressing portion protruding downward from the holder and located close to the support member in the first direction.

Accordingly, the positional deviation of the holder in the first direction with respect to the support member is limited to the range of distance until the backlash suppressing portion comes into contact with the support member. Thus, the positional deviation of the sensor body with the holder in the first direction may be suppressed, and the load information detection performance by the sensor body may be further improved. Further, even when the arm portions are pressed against the support member due to the positional deviation of the holder in the first direction with respect to the support member, the possibility that the arm portions are broken due to the pressing may be reduced.

This invention is effective in suppressing the fitting pieces from being broken without deteriorating the assemblability.

### BRIEF DESCRIPTION OF THE DRAWINGS

The foregoing, additional features, effects and advantages of this invention will become more apparent from the following detailed description considered with the reference to the accompanying drawings, wherein:
Fig. 1 is a vertical sectional view illustrating a structure of a seating sensor according to an exemplary embodiment;
Fig. 2 is a perspective view illustrating the structure of the seating sensor according to the exemplary embodiment;
Fig. 3 is a side view illustrating the structure of the seating sensor according to the exemplary embodiment;
Fig. 4 is a plan view illustrating the structure of the seating sensor according to the exemplary embodiment;
Figs. 5A and 5B are side view and enlarged view, respectively, illustrating the structure of the seating sensor according to the exemplary embodiment;
Fig. 6 is a sectional view taken along line 6-6 of Fig. 4;
Fig. 7A is a side view illustrating the structure of the seating sensor according to the exemplary embodiment, and Fig. 7B is a sectional view taken along line 7B-7B of Fig. 7A;
Figs. 8A and 8B are side views illustrating a holder of the seating sensor according to the exemplary embodiment in a state where no load is applied and in a state where a load is applied, respectively;
Figs. 9A and 9B are sectional views illustrating a fitting portion of the seating sensor according to the exemplary embodiment in a state where no load is applied and in a state where a load is applied, respectively;
Figs. 10A and 10B are sectional views illustrating a fitting portion of a seating sensor of a comparative example in a state where no load is applied and in a state where a load is applied, respectively;
Figs. 11A and 11B are side views illustrating an operation of the seating sensor according to the exemplary embodiment; and
Fig. 12A is a vertical sectional view illustrating the structure of the seating sensor according to the exemplary embodiment, and Fig. 12B is a vertical sectional view illustrating a structure of a seating sensor according to a modification.

### DETAILED DESCRIPTION

Hereinafter, an exemplary embodiment of a seating sensor will be described. Hereinbelow, the forward and rearward direction of a vehicle will be referred to as the "longitudinal direction."

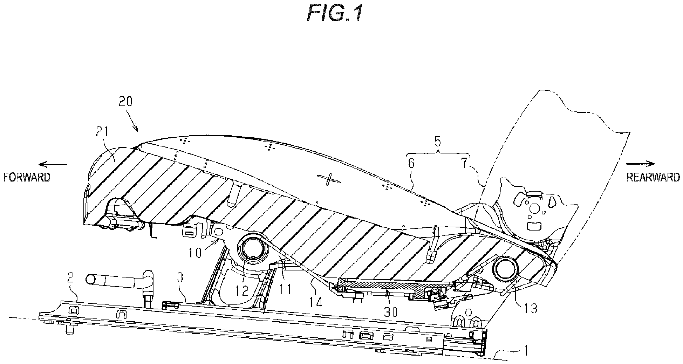

As illustrated in Fig. 1, lower rails 2 are fixed on a floor 1 of a vehicle in a state of extending in the longitudinal direction, and upper rails 3 are connected to the lower rails 2 to be movable in the longitudinal direction with respect to the lower rails 2.

Both the lower rails 2 and the upper rails 3 are arranged in pairs in the width direction (the direction orthogonal to the plane of the sheet of Fig. 1). Fig. 1 illustrates the pair of the lower rail 2 and the upper rail 3 arranged on the right side in the state of facing the forward direction. A seat 5 is fixed and supported on the opposite upper rails 3 to form the seating portion for an occupant.

The seat 5 includes a seat cushion 6 forming the seating surface and a seat back 7 tiltably (pivotably) supported at the rear end portion of the seat cushion 6. The seat cushion 6 includes a cushion frame 10 forming the frame of the seat cushion 6 and a cushion member 20 covering the cushion frame 10. The cushion frame 10 includes a pair of cushion side frames 11 that are arranged side by side in the width direction to be placed on the opposite upper rails 3 and made of, for example, a metal plate. Further, the cushion frame 10 includes a substantially cylindrical front connection rod 12 that extends in the width direction to connect the front portions of the opposite cushion side frames 11 to each other, and a substantially cylindrical rear connection rod 13 that extends in the width direction to connect the rear portions of the opposite cushion side frames 11 to each other. The cushion member 20 includes a cushion pad 21 made of, or example, an urethane resin, and is supported on the cushion frame 10 in a state of covering the entire cushion frame 10 from the upper side.

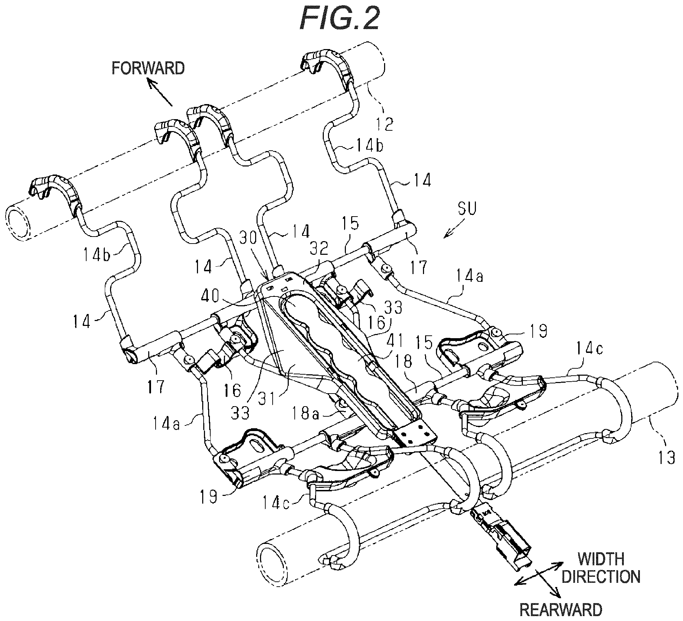

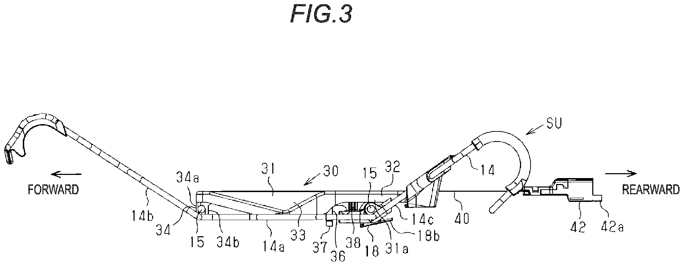

That is, as illustrated in Figs. 2 and 3, a plurality of S-shaped springs 14 basically extending in the longitudinal direction are suspended between the front connection rod 12 and the rear connection rod 13 in a state of being spaced apart from each other in the width direction. Each S-shaped spring 14 is formed of a wire having a substantially circular cross section, and has a flat portion 14a positioned on a plane expanding substantially horizontally below the front connection rod 12 and the rear connection rod 13. Further, each S-shaped spring 14 has a front inclined portion 14b that is connected to the front end of the flat portion 14a and extends forwardly obliquely upward to be hooked on the front connection rod 12, and a rear inclined portion 14c that is connected to the rear end of the flat portion 14a and extends rearwardly obliquely upward to be hooked on the rear connection rod 13. A substantially columnar connection rod 15 extending in the width direction is placed on the plurality of S-shaped springs 14 at the connection positions between the flat portions 14a and the front inclined portions 14b, and a plurality of resin molds 16 and 17 are molded to integrally cover the connection positions together with the connection rod 15. Similarly, another substantially columnar connection rod 15 extending in the width direction is placed on the plurality of S-shaped springs 14 at the connection positions between the flat portions 14a and the rear inclined portions 14c. Then, a resin mold 18 is molded on the pair of S-shaped springs 14, the central portions of which are located adjacent to each other to integrally cover the connection positions together with the connection rod 15. Further, resin molds 19 are molded on the outermost S-shaped springs 14, respectively, to integrally cover the connection positions together with the connection rod 15. The cushion member 20 is supported on the cushion frame 10 at the S-shaped springs 14, the two connection rods 15, and the resin molds 16 to 19. The plurality of S-shaped springs 14, the two connection rods 15, and the resin molds 16 to 19 constitute a support member SU.

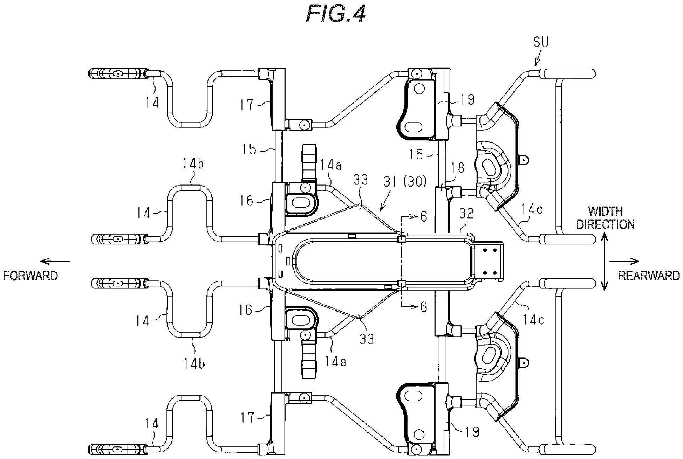

As illustrated in Fig. 4, a seating sensor 30 is mounted on the support member SU. The seating sensor 30 includes a holder 31 that is placed on the support member SU in a state of being sandwiched between the cushion member 20 and the support member SU, and made of, for example, a resin material. The holder 31 includes a substantially rectangular dish-shaped pedestal 32 that extends in the longitudinal direction with a width dimension corresponding to the minimum spacing distance between the pair of S-shaped springs 14 adjacent to each other at the central portion, and a pair of substantially triangular protrusions 33 that protrude symmetrically in the width direction from the front end portion of the pedestal 32.

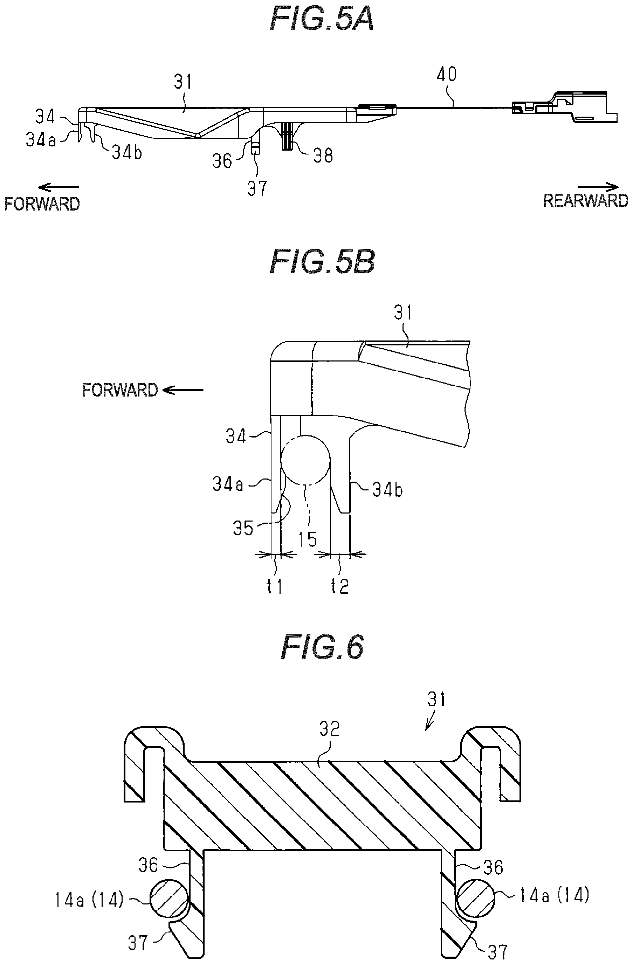

As illustrated in Fig. 3 and Figs. 5A and 5B, a fitting portion 34 protrudes downward from the front end of the holder 31 to be opposite to the middle portion of the connection rod 15 exposed from both the resin molds 16 adjacent to each other in the width direction. The fitting portion 34 includes a first fitting piece 34a that protrudes downward from the front end (the end portion) of the holder 31, and a second fitting piece 34b that protrudes downward from the holder 31 in the vicinity to the first fitting piece 34a behind the first fitting piece 34a (the opposite side to the end portion of the first fitting piece 34a), so as to be molded in a substantially U shape. The plate thickness t1 of the base end portion of the first fitting piece 34a is set to be smaller than the plate thickness t2 of the base end portion of the second fitting piece 34b. The spacing distance in the longitudinal direction between the first and second fitting pieces 34a and 34b is set to be equal to the diameter of the connection rod 15. The fitting portion 34 is mounted in the state of being always in contact with the support member SU in a state where the connection rod 15 (the support member SU) is fitted between the first and second fitting pieces 34a and 34b.

In addition, a substantially triangular first slip-off preventing portion 35 as a slip-off preventing portion is provided at the tip end of the first fitting piece 34a to protrude rearward toward the second fitting piece 34b. The first slip-off preventing portion 35 is positioned below the connection rod 15 (the support member SU) fitted between the first and second fitting pieces 34a and 34b. Thus, the upward positional deviation of the holder 31 with respect to the support member SU is limited to the range until the first slip-off preventing portion 35 comes into contact with the support member SU. Therefore, the holder 31 is suppressed from being separated upward from the support member SU.

Meanwhile, the rear end portion 31a of the holder 31 (the pedestal 32) is placed on the resin mold 18 (the support member SU). That is, the holder 31 is supported on the support member SU at the two points of the front end (the fitting portion 34) and the rear end portion 31a.

As illustrated in Fig. 6, in the holder 31, a pair of substantially square columnar arm portions 36 protrude downward from the pedestal 32 at the opposite adjacent rear sides of the two protrusions 33, respectively. The spacing distance between the two arm portions 36 arranged side by side in the width direction (a first direction orthogonal to the arrangement direction of the first and second fitting pieces 34a and 34b) is set to be equal to the spacing distance between the flat portions 14a (the S-shaped springs 14). In the state where the holder 31 is supported on the support member SU, the two arm portions 36 are fitted and accommodated between the flat portions 14a.

In addition, substantially triangular second slip-off preventing portions 37 protrude symmetrically in the width direction from the tip ends of the two arm portions 36, respectively. The second slip-off preventing portions 37 are positioned below the two flat portions 14a (the support member SU) between which the two arm portions 36 are fitted. Thus, the upward positional deviation of the holder 31 with respect to the support member SU is limited to the range until each of the second slip-off preventing portions 37 comes into contact with the support member SU. Therefore, the holder 31 is suppressed from being separated upward from the support member SU.

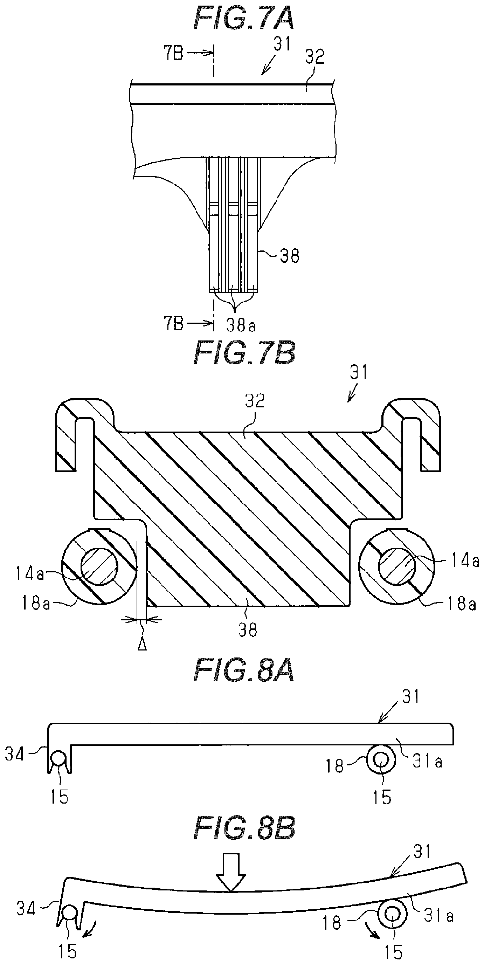

As illustrated in Figs. 7A and 7B, in the holder 31, a substantially square columnar backlash suppressing portion 38 protrudes downward from the pedestal 32 behind the two arm portions 36 (the protrusions 33). Meanwhile, the resin mold 18 includes a pair of substantially cylindrical mold portions 18a that are concentric with the opposite flat portions 14a and cover the flat portions 14a, respectively. The backlash suppressing portion 38 is positioned at the central portion of the pedestal 32 fitted between the opposite mold portions 18a in the width direction. The backlash suppressing portion 38 is provided with a plurality of substantially stripe-shaped ribs 38a that protrude symmetrically in the width direction from the opposite lateral surfaces of the backlash suppressing portion 38 in the width direction. The ribs 38a extend vertically in a state of being arranged side by side in the longitudinal direction. In the state where the holder 31 is supported on the support member SU, the backlash suppressing portion 38 is fitted and accommodated between the opposite mold portions 18a. At this time, the backlash suppressing portion 38 is normally (initially) slightly spaced apart from the respective mold portions 18a by a clearance Δ in the width direction. That is, the plurality of ribs 38a of the backlash suppressing portion 38 approach the opposite mold portions 18a (the support member SU) in the width direction (the first direction). Thus, the positional deviation of the holder 31 in the width direction with respect to the support member SU is limited to the range until the backlash suppressing portion 38 (the plurality of ribs 38a) comes into contact with the support member SU.

As illustrated in Fig. 2, a sensor body 40 extending in the longitudinal direction along the pedestal 32 is placed on the holder 31. The sensor body 40 is configured with a membrane switch obtained by laminating, via an insulating spacer (e.g., a polyester film), a pair of contact sheets, each of which is obtained by printing a conductive ink (e.g., silver paste or carbon paste) on an insulating film (e.g., a polyester film). The sensor body 40 detects information of a load applied from the cushion member 20. At this time, the pedestal 32 functions as a pressure receiving surface of the load. In addition, a detection unit 41 in a shape of substantially continuous multi-circles related to the load detection of the sensor body 40 extends in the longitudinal direction between the two points at which the holder 31 is supported on the support member SU.

As illustrated in Fig. 3, a connector 42 to be connected with, for example, a control device is provided at the tip end of the sensor body 40 on the side that is away from the detection unit 41. A substantially square tubular engagement portion 42a protrudes from the tip end of the connector 42 and is opened toward the extending direction of the sensor body 40. Meanwhile, a substantially protrusion-shaped engagement convex portion 18b protrudes rearward from the central portion of the resin mold 18 in the width direction. The connector 42 is held on the support member SU by fitting the engagement convex portion 18b into the engagement portion 42a that extends forward by folding the rear end portion of the sensor body 40 forward.

Next, the operation of the exemplary embodiment configured as described above will be described.

As described above, the plate thickness t1 of the base end portion of the first fitting piece 34a is set to be smaller than the plate thickness t2 of the base end portion of the second fitting piece 34b. This is because the first fitting piece 34a is mainly elastically deformed so as to widen the space between the first and second fitting pieces 34a and 34b at the time of mounting the fitting portion 34 on the connection rod 15 (the support member SU), so that the first slip-off preventing portion 35 may ride over the connection rod 15.

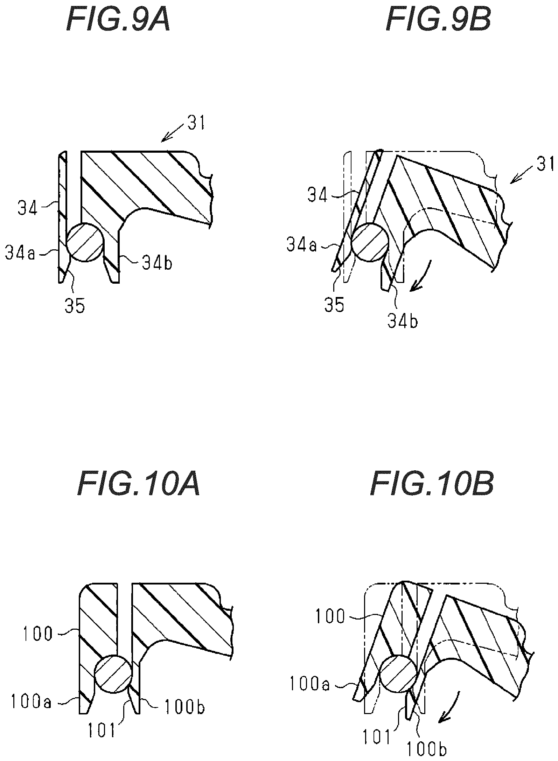

As illustrated Figs. 8A and 8B, the holder 31 is supported on the support member SU at the two points of the front end (the fitting portion 34) and the rear end portion 31a of the holder 31. As illustrated in Figs. 9A and 9B, when a load is applied from the cushion member 20 (from the upper side), the fitting portion 34 positioned at the end portion of the holder 31 receives the force to cause the fitting portion 34 to be pivoted in the illustrated clockwise direction around the connection rod 15. At this time, due to the reaction force from the support member SU, the stress is concentrated on the root of the second fitting piece 34b adjacent to the opposite side of the end portion of the first fitting piece 34a. However, since the plate thickness t2 of the base end portion (root) of the second fitting piece 34b is set to be larger than the plate thickness t1 of the base end portion (root) of the first fitting piece 34a, the rigidity of the second fitting piece 34b is relatively high. Thus, the second fitting piece 34b is suppressed from being broken.

As illustrated in Figs. 10A and 10B, in a fitting portion 100 including a fitting piece 100a similar to the second fitting piece 34b at the front end and including a fitting piece 100b similar to the first fitting piece 34a provided with a first slip-off preventing portion 101 behind the fitting piece 100a (at the opposite end side), stresses concentrate on the base end portion (the interior of the illustrated circle) of the first fitting piece 100b that becomes the weakest portion, and as a result, the fitting piece 100b may be broken.

Next, the effects of the present exemplary embodiment will be described.
(1) In the present exemplary embodiment, when the first fitting piece 34a is mainly elastically deformed at the time of mounting the fitting portion 34 on the support member SU, the space between the first and second fitting pieces 34a and 34b is widened, so that the first slip-off preventing portion 35 rides over the support member SU. Here, since the fitting portion 34 (the first and second fitting pieces 34a and 34b) is positioned at the end portion of the holder 31, for example, when the holder 31 is deformed due to the load applied from the cushion member 20, stresses concentrate on the root of the second fitting piece 34b adjacent to the opposite side to the end portion of the first fitting piece 34a. Even if the second fitting piece 34b is made difficult to be elastically deformed, since the influence on the assemblability is small, for example, the rigidity of the second fitting piece 34b may be enhanced by making the second fitting piece 34b thick. Thus, the second fitting piece 34b may be suppressed from being broken. Meanwhile, since the stresses concentrating on the root of the first fitting piece 34a becomes relatively small, the first fitting piece 34a may be suppressed from being broken, even if the first fitting piece 34a is thinned to be easily elastically deformed. Further, by making the first fitting piece 34a related to the so-called snap fit structure easily elastically deformed, the deterioration of the assemblability may be suppressed.
   Especially, in the seating sensor 30 positioned below the cushion member 20, it is necessary to satisfy the detection performance in consideration of the positional deviation of the hips of an occupant on the seat surface of the seat cushion 6, so that the seating sensor 30 (the holder 31) is obliged to be enlarged. Thus, since the enlarged holder 31 is more easily deformed, it is more effective to suppress the second fitting piece 34b from being broken due to the deformation.
(2) In the present exemplary embodiment, the upward positional deviation of the holder 31 with respect to the support member SU is limited to the range until the second slip-off preventing portions 37 come into contact with the support member SU. Thus, the holder 31 may be suppressed from being separated upward from the support member SU. Further, the upward positional deviation of the holder 31 with respect to the support member SU is limited to the range until the first slip-off preventing portion 35 comes into contact with the support member SU. Thus, in cooperation with the first and second slip-off preventing portions 35 and 37, the holder 31 may be further suppressed from being separated upward from the support member SU.
(3) In the present exemplary embodiment, the positional deviation of the holder 31 in the width direction (the first direction) with respect to the support member SU is limited to the range until the backlash suppressing portion 38 comes into contact with the support member SU. Thus, the positional deviation of the sensor body 40 with the holder 31 in the width direction may be suppressed, and the load information detection performance (e.g., robustness) by the sensor body 40 may be further improved. In addition, even when the arm portions 36 are pressed against the support member SU due to the positional deviation of the holder 31 in the width direction with respect to the support member SU, the possibility that the arm portions 36 are broken by the pressing may be reduced. Further, the possibility that the holder 31 is deformed due to an overload applied by, for example, the excessive movement of the holder 31 in the width direction may be reduced.
(4) In the present exemplary embodiment, the backlash suppressing portion 38 is normally (initially) slightly spaced apart from the respective mold portions 18a (the support member SU) by the clearance Δ in the width direction. Thus, for example, even when variations in the dimensions of the support members SU are caused due to, for example, variations of products, the deterioration of the assemblability may be suppressed.
(5) In the present exemplary embodiment, the sensor body 40 is a membrane switch formed in a film shape. Thus, it is possible to make the sensor body 40 thinner and to further improve drip-proof performance and dust-proof performance.

The above-described exemplary embodiment may be modified as described below.

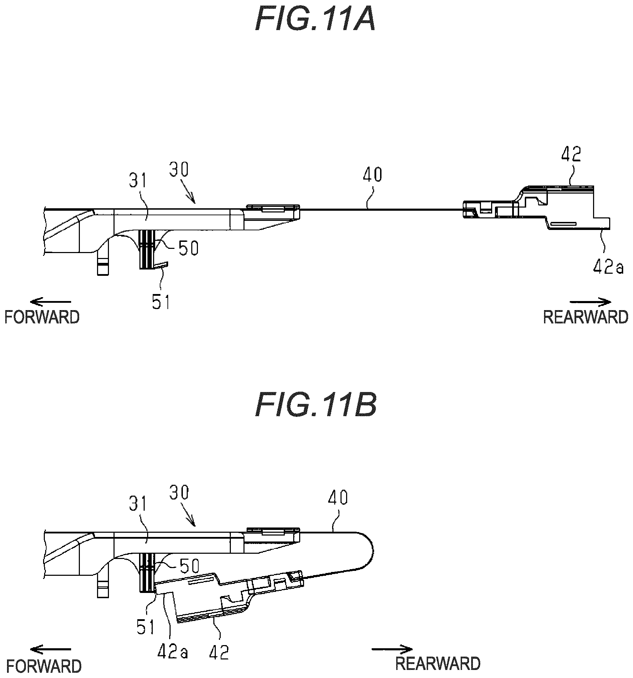

As illustrated in Figs. 11A and 11B, a substantially protrusion-shaped engagement convex portion 51 may be provided on a backlash suppressing portion 50 similar to the backlash suppressing portion 38 of the holder 31, to protrude rearward from the lower end of the central portion of the backlash suppressing portion 50 in the width direction. Then, the connector 42 may be temporarily held on the holder 31 by fitting the engagement convex portion 51 into the engagement portion 42a that extends forward by folding the rear end portion of the sensor body 40. In this case, for example, the fluttering of the connector 42 during the transportation thereof may be suppressed. Otherwise, the fluttering of the connector 42 during the assembly thereof may be suppressed. Furthermore, the assemblability of the seating sensor 30 may be improved, and the positional deviation of the seating sensor 30 may be prevented.

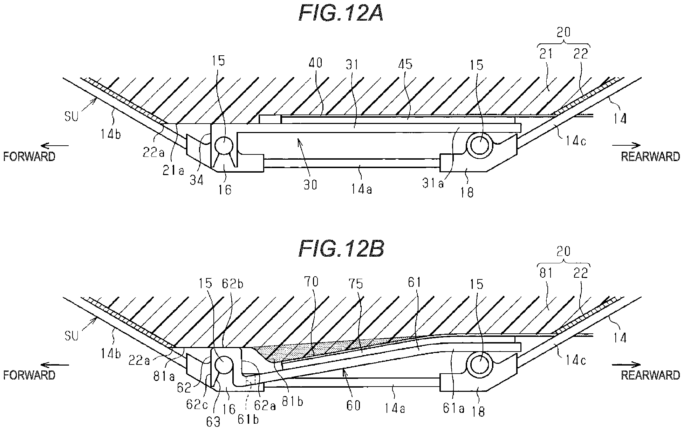

As illustrated in Fig. 12A, the holder 31 basically extends substantially horizontally along the flat portion 14a above the flat portion 14a. In addition, the cushion member 20 supported on the support unit SU is molded to secure the space for accommodating the seating sensor 30. That is, the cushion member 20 includes a rear surface material 22 made of, for example, a non-woven fabric, and the bottom surface of the cushion pad 21 is covered with the rear surface material 22. An opening 22a is formed in the rear surface material 22 to correspond to the arrangement of the seating sensor 30. Meanwhile, a recessed portion 21a is formed in the cushion pad 21 to be recessed upward to correspond to the arrangement of the seating sensor 30 (the opening 22a). The bottom surface of the recessed portion 21a is basically in contact with or close to the sensor body 40 to the extent that a pressure is not applied to the sensor body 40. In addition, a substantially band-shaped buffer cushion material 45 is interposed between the holder 31 and the sensor body 40. The cushion material 45 may be omitted.

As illustrated in Fig. 12B, a seating sensor 60 provided with a holder 61 that is bent to be inclined forwardly obliquely downward rather than following the flat portion 14a is also be conceivable. In this case, a fitting portion 62 is provided at the front end of the holder 61 to protrude upward so as to be spaced apart from the central portion of the connection rod 15 exposed from the opposite resin molds 16 which are adjacent to each other in the width direction. The fitting portion 62 includes a fitting piece 62a that protrudes upward from the front end of the holder 61, a connection portion 62b that is connected to the top end of the fitting piece 62a to extend forward, and a fitting piece 62c that protrudes downward from the front end of the connection portion 62b, and is formed in the substantially U shape. The spacing distance between the opposite fitting pieces 62a and 62c that are arranged side by side in the longitudinal direction is set to be equal to the diameter of the connection rod 15. The fitting portion 62 is mounted on the support member SU to be always in contact with the support member SU in a state where the connection rod 15 (the support member SU) is fitted between the opposite fitting pieces 62a and 62c.

A substantially triangular first slip-off preventing portion 63 protrudes from the tip end of the fitting piece 62c toward the fitting piece 62a. The first slip-off preventing portion 63 is positioned below the connection rod 15 (the support member SU) that is fitted between the opposite fitting pieces 62a and 62c. Thus, the upward positional deviation of the holder 61 with respect to the support member SU is limited to the range until the first slip-off preventing portion 63 comes into contact with the support member SU. Thus, the holder 61 is suppressed from being separated upward from the support member SU.

Meanwhile, the rear end portion 61a of the holder 61 is placed on the resin mold 18 (the support member SU). That is, the holder 61 is supported on the support member SU at the two points of the front end (the fitting portion 62) and the rear end portion 61a of the holder 61.

In addition, a sensor body 70 similar to the sensor body 40 is placed on the holder 61 in a state of being inclined forwardly obliquely downward along the holder 61. Thus, a space enlarged by the inclination of the sensor body 70 etc. is formed above the sensor body 70. Further, a substantially band-shaped buffer cushion material 75 similar to the cushion material 45 is interposed between the holder 61 and the sensor body 70. The cushion material 75 may be omitted. That is, the portion of the holder 61 that receives the load is formed in a three-dimensional form (a shape bent to be inclined forwardly obliquely downward) in consideration of the fact that the portion may be followed by the flexible sensor body 70 (and the cushion material).

In this case as well, the cushion member 20 is molded to secure the space for accommodating the seating sensor 60. That is, a recessed portion 81a is formed in the cushion pad 81 to be recessed upward to correspond to the arrangement of the seating sensor 60 (the opening 22a). The bottom surface of the recessed portion 81a is basically in contact with or close to the sensor body 70 to the extent that a pressure is not applied to the sensor body 40. Thus, as illustrated in a pattern of Fig. 12B, a protrusion 81b is formed on the cushion pad 81 to raise the bottom surface of the recessed portion 81a downward, so as to fill the above-described expanded space.

According to this modification, since the recessed portion 81a of the cushion pad 81 becomes shallow by the size of the protrusion 81b, the vertical thickness of the cushion pad 81 may be secured, and therefore, the sitting comfortability performance may be further improved. In addition, since the sensor body 70 may be disposed at an optimal position for detecting the load information, regardless of the shape of the support member SU, the deterioration of the detection performance of the sensor body 70 may be suppressed. Therefore, both the sitting comfortability performance and the detection performance may be secured.

In addition, a drain hole 61b is formed in the vicinity of the fitting portion 62 which is the lowermost position of the holder 61. Water accumulated in the holder 61 is quickly discharged by the drain hole 61b, so that the deterioration of the cushion material 75 such as hardening is suppressed.

In the above-described exemplary embodiment, at least some of the plurality of (four) S-shaped springs 14 may be connected to each other by a single wire, or all the S-shaped springs 14 may be separated from each other.

In the above-described exemplary embodiment, the support member may be a support member in which a plurality of S-shaped springs basically extending in the width direction are suspended between the opposite cushion side frames 11 in a state of being spaced apart from each other in the longitudinal direction.

In the above-described exemplary embodiment, the support member may be configured with only a plurality of S-shaped springs 14.

In the above-described exemplary embodiment, at least one of the first and second fitting pieces 34a and 34b of the fitting portion 34 may be divided into a plurality of pieces in the width direction.

In the above-described exemplary embodiment, the arrangement of the fitting portion 34 is arbitrary as long as the fitting portion 34 is provided at the end portion of the holder 31. For example, the fitting portion 34 may be arranged at the front end portion or the rear end portion (rear end) of the holder 31.

In the above-described exemplary embodiment, with regard to the fitting portion 34 mounted on the support member SU, a plurality of fitting portions may be provided as long as the fitting portions are provided at the end portion of the holder. For example, in addition to the fitting portion 34, the same fitting portion as the fitting portion 34 may be provided at the rear end portion of the holder 31.

In the above-described exemplary embodiment, the number of the ribs 38a protruding from the opposite lateral surfaces of the backlash suppressing portion 38 in the width direction is arbitrary.

In the above-described exemplary embodiment, the plurality of ribs 38a may protrude from only one lateral surface of the backlash suppressing portion 38.

In the above-described exemplary embodiment, the plurality of ribs 38a may be omitted.

In the above-described exemplary embodiment, the backlash suppressing portion 38 may be omitted. In this case, the arm portions 38 (and the second slip-off preventing portions 37) may be omitted, or one arm portion (and one second slip-off preventing portion) may be provided.

In the above-described exemplary embodiment, the number and the arrangement of the arm portions 36 (and the second slip-off preventing portions 37) are arbitrary.

In the above-described exemplary embodiment, the holder 31 may be made of a metal.

Next, the technical idea that may be understood from the above-described exemplary embodiment and other examples are additionally described.

In the seating sensor, the sensor body is a membrane switch formed in a film shape.

According to this configuration, since the sensor body is a membrane switch formed in a film shape, it is possible to make the sensor body thinner and to further improve drip-proof performance and dust-proof performance.

The principles, preferred embodiment and mode of operation of the present invention have been described in the foregoing specification; however, the invention which is intended to be protected is not to be construed as limited to the particular embodiments disclosed, i.e. all such variations, changes and equivalents which fall under the scope of the present invention as defined in the appended claims are embraced thereby.

A seating sensor (30) includes: a holder (31) configured to be placed, in a state of being sandwiched between a cushion member (20) of a seat cushion (6) and a support member (SU) supporting the cushion member, on the support member; a sensor body (40) placed on the holder and configured to detect information of a load applied from the cushion member; a fitting portion (34) including a first fitting piece (34a) protruding downward from an end portion of the holder and a second fitting piece (34b) adjacent to an opposite side to the end portion of the first fitting piece and protruding downward from the holder, and mounted on the support member in a state where the support member is fitted between the first and second fitting pieces; and a slip-off preventing portion (35) protruding from a tip end of the first fitting piece toward the second fitting piece.

## Claims

1. A seating sensor (30) comprising:
a holder (31) configured to be placed, in a state of being sandwiched between a cushion member (20) of a seat cushion (6) of a vehicle and a support member (SU) that supports the cushion member (20), on the support member (SU);
a sensor body (40) placed on the holder (31) and configured to detect information of a load applied from the cushion member (20);
a fitting portion (34) including a first fitting piece (34a) protruding downward from an end portion of the holder (31) and a second fitting piece (34b) protruding downward from the holder (31) in the vicinity to the first fitting piece (34a) behind the first fitting piece (34a), and mountable on the support member (SU) in a state where the support member (SU) is fitted between the first and second fitting pieces (34a and 34b);
a slip-off preventing portion (35) protruding from a tip end of the first fitting piece (34a) toward the second fitting piece (34b);
an arm portion (36) protruding downward from the holder (31); and
a second slip-off preventing portion (37) protruding from a tip end of the arm portion (36) and configured to be brought into contact with or located close to the support member (SU) from an upper side,
**characterized in that**
the seating sensor (30) further comprises:
a pair of the arm portions (36) that are arranged side by side in a first direction orthogonal to a direction in which the first and second fitting pieces (34a and 34b) are arranged side by side and configured to be brought into contact with or located close to the support member (SU) at one side and the other side in the first direction; and
a backlash suppressing portion (38, 50) protruding downward from the holder (31) and located close to the support member (SU) in the first direction.

## Patentansprüche

1. Sitzsensor (30), der Folgendes aufweist:
eine Halterung (31), die gestaltet ist, um in einem Zustand, in dem sie zwischen einem Polsterbauteil (20) eines Sitzpolsters (6) eines Fahrzeugs und einem Stützbauteil (SU), das das Polsterbauteil (20) stützt, angeordnet ist, an dem Stützbauteil (SU) angeordnet zu werden;
einen Sensorkörper (40), der an der Halterung (31) angeordnet ist und gestaltet ist, um Informationen einer Last, die von dem Polsterbauteil (20) aufgebracht wird, zu erfassen;
einen Passabschnitt (34), der ein erstes Passstück (34a), das von einem Endabschnitt der Halterung (31) nach unten vorsteht, und ein zweites Passstück (34b) aufweist, das von der Halterung (31) in der Umgebung an dem ersten Passstück (34a) hinter dem ersten Passstück (34a) nach unten vorsteht, und der an dem Stützbauteil (SU) in einem Zustand montierbar ist, in dem das Stützbauteil (SU) zwischen dem ersten Passstück und dem zweiten Passstück (34a und 34b) eingepasst ist;
einen Abrutschverhinderungsabschnitt (35), der von einem vorderen Ende des ersten Passstücks (34a) in Richtung des zweiten Passstücks (34b) vorsteht;
einen Armabschnitt (36), der von der Halterung (31) nach unten vorsteht; und
einen zweiten Abrutschverhinderungsabschnitt (37), der von einem vorderen Ende des Armabschnitts (36) vorsteht und gestaltet ist, um mit dem Stützbauteil (SU) von einer oberen Seite in Kontakt gebracht zu werden oder um nahe an dem Stützbauteil (SU) von der oberen Seite angeordnet zu werden,
**dadurch gekennzeichnet, dass**
der Sitzsensor (30) des Weiteren Folgendes aufweist:
ein Paar der Armabschnitte (36), die nebeneinander in einer ersten Richtung orthogonal zu einer Richtung, in der das erste Passstück und das zweite Passstück (34a und 34b) nebeneinander angeordnet sind, angeordnet sind und gestaltet sind, um mit dem Stützbauteil (SU) an der einen Seite und der anderen Seite in der ersten Richtung in Kontakt gebracht zu werden oder um nahe an dem Stützbauteil (SU) an der einen Seite und der anderen Seite in der ersten Richtung angeordnet zu werden; und
einen Spielverhinderungsabschnitt (38, 50), der von der Halterung (31) nach unten vorsteht und nahe an dem Stützbauteil (SU) in der ersten Richtung angeordnet ist.

## Revendications

1. Capteur d'assise (30) comprenant :
un dispositif de maintien (31) configuré pour être placé, dans un état pris en sandwich entre un élément de coussin (20) d'un coussin de siège (6) d'un véhicule, et un élément de support (SU) qui supporte l'élément de coussin (20), sur l'élément de support (SU) ;
un corps de capteur (40) placé sur le dispositif de maintien (31) et configuré pour détecter des informations d'une charge appliquée depuis l'élément de coussin (20) ;
une partie d'installation (34) incluant une première pièce d'installation (34a) faisant saillie vers le bas depuis une partie d'extrémité du dispositif de maintien (31) et une seconde pièce d'installation (34b) faisant saillie vers le bas depuis le dispositif de maintien (31) à proximité de la première pièce d'installation (34a) derrière la première pièce d'installation (34a), et pouvant être montée sur l'élément de support (SU) dans un état où l'élément de support (SU) est installé entre les première et seconde pièces d'installation (34a et 34b) ;
une partie de protection contre le glissement (35) faisant saillie depuis une extrémité de pointe de la première pièce d'installation (34a) vers la seconde pièce d'installation (34b) ;
une partie de bras (36) faisant saillie vers le bas depuis le dispositif de maintien (31) ; et
une seconde partie de protection contre le glissement (37) faisant saillie depuis une extrémité de pointe de la partie de bras (36) et configurée pour être amenée en contact avec l'élément de support (SU) ou située près de celui-ci depuis un côté supérieur,
**caractérisé en ce que**
le capteur d'assise (30) comprend en outre :
une paire des parties de bras (36) qui sont agencées côte à côte dans une première direction orthogonale à une direction dans laquelle les première et seconde pièces d'installation (34a et 34b) sont agencées côte à côte et configurées pour être amenées en contact avec l'élément de support (SU) ou situées près de celui-ci au niveau d'un côté et de l'autre côté dans la première direction ; et
une partie de suppression de jeu (38, 50) faisant saillie vers le bas depuis le dispositif de maintien (31) et située près de l'élément de support (SU) dans la première direction.
